# EUROPÄISCHE PATENTSCHRIFT

(11) **EP 1 675 708 B1**
(45) Veröffentlichungstag und Bekanntmachung des Hinweises auf die Patenterteilung: **23.09.2009**
(21) Anmeldenummer: 04762439.0
(22) Anmeldetag: 21.07.2004
(51) Int. Cl.: B25B 21/00, B25F 5/02, B25F 5/00, H01M 2/10, H05K 5/00

(54) **AKKUSCHRAUBER MIT ZWEITEILIGEM MOTORGEHÄUSE UND ANGEFLANSCHTER SEPARATER GETRIEBEEINHEIT**
BATTERY-DRIVEN SCREWDRIVER WITH A TWO-PART MOTOR HOUSING AND A SEPARATE, FLANGED GEAR UNIT
VISSEUSE A BATTERIE DOTEE D'UN BOITIER MOTEUR EN DEUX PARTIES ET D'UNE UNITE ENGRENAGE SEPAREE FIXEE PAR BRIDE

(30) Priorität: 29.09.2003 DE 10345133
(43) Veröffentlichungstag der Anmeldung: 05.07.2006
(73) Patentinhaber: ROBERT BOSCH GMBH, 70442 Stuttgart (DE)
(72) Erfinder: KAGELER, Sven, 11900 Bayan Lepas Penang (MY); YUH GAN, Ginn, 10450 Penang (MY); AZIZ ZULFIKAR, Abdul, 10050 Penang (MY)
(86) Internationale Anmeldenummer: PCT/DE2004/001589
(87) Internationale Veröffentlichungsnummer: WO 2005/039831

(56) Entgegenhaltungen:
- EP-A- 0 493 033
- EP-A- 0 792 724
- EP-A- 1 240 983
- EP-A- 1 293 306
- US-A- 4 912 349
- US-A1- 2003 015 066

## Beschreibung

### Stand der Technik

Die vorliegende Erfindung geht aus von einem Akkuschrauber gemäß dem Oberbegriff des Anspruchs 1.

Es gibt bereits Akkuschrauber in der Leistungsklasse zwischen 2.4V bis 3.6V, wie beispielweise aus der EP 1066 930 bekannt. Diese haben zumeist mehrere NiCd-Zellen als Energiespeicher, einen Ein-Aus-Schalter mit kurzer Schalttaste und ohne stufenlose Drehzahlregelung sowie einen Schalter zur Umschaltung von Links- auf Rechtslauf, ein die Motordrehzahl untersetzendes Getriebe, insbesondere Planetengetriebe, und einen Motor mit einem Standard-Durchmesser von 27.5mm. Dabei gibt es stabförmige und pistolenförmige Ausführungen sowie Ausführungen mit winkelverstellbarem Griff. Diese Geräte werden zum Laden entweder über einen Stecker mit dem Ladegerät verbunden - ähnlich wie ein Handy oder ein Rasierapparat - oder über eine Halterung mit Kontakten, in die das Gerät gelegt wird. Die Halterungen sind z. B. an einer Wand befestigbar, um die Handhabung beim Laden zu vereinfachen.

Dazu muss zuvor für das Ladegerät und die elektrische Verbindung der Lademodus hergestellt werden, was jedoch nicht automatisch nach jedem Einsatz geschieht. Dadurch ist das Gerät oft gerade dann nicht einsatzbereit ist, wenn es benötigt wird, wobei der bekannte Memoryeffekt nachteilig hinzukommt. NiCd Zellen entladen nach einer gewissen Zeit ohne Leistungsabgabe und auch unbenutzte Akku-Schrauber sind nach kurzer Zeit teilentladen. Werden sie geladen, wenn sie teil-entladen sind, steht aufgrund des Memoryeffekts nach dem Ladevorgang nur die Differenz der Neulademenge - und damit eine verringerte Leistung - zur Verfügung.

Ein weiterer Nachteil der bekannten Akkuschrauber ist deren voluminöse Baugröße infolge großer Baugruppen, z.B. des Getriebes, der Schaltersysteme und der Akkus in Gestalt von NiCd Zellen, deren Größe "4/5 Sub-C" bei Anordnung im Handgriff die Ergonomie und die Verwendbarkeit beeinträchtigt, da enge, winklige Schraubstellen nicht erreichbar sind.

Aus EP 1293 306 A1 ist ein Akkuschrauber mit einem Getriebegehäuse bekannt, welches eine zylindrische Verlängerung mit einer äußeren Gehäuseringnut, die von einem Ringwulst begrenzt wird, aufweist.

In US 4 912 349 ist ebenfalls ein Akkuschrauber beschrieben, dessen Getriebegehäuse eine zylindrische Verlängerung mit einer äußeren Gehäuseringnut, die von einem Ringwulst begrenzt wird, aufweist.

Ferner ist in EP 493 033 A1 ein Winkelschleifer beschrieben, dessen Getriebegehäuse eine zylindrische Verlängerung mit einer äußeren Gehäuseringnut, die von einem Ringwulst begrenzt wird, aufweist. In die Gehäuseringnut greift ein Wulst des Motorgehäuses derart ein, dass das Motorgehäuse relativ zu dem Getriebegehäuse verdrehbar gelagert ist.

### Vorteile der Erfindung

Der erfindungsgemäße Akkuschrauber mit den Merkmalen des Anspruchs 1 hat den Vorteil, dass er stets am gleichen Platz mit voller, verfügbarer Ladekapazität schnell und sicher greifbar, dabei kostengünstig herzustellen und äußerst leicht und handlich ist.

Dies ist auch dadurch bedingt, dass sich das Motorgehäuse aus mittig geteilten Halbschalen zusammensetzt, die das Getriebegehäuse zangenartig mit radial nach innen ragenden Stützzungen von beiden Seiten umgreifen, zentrieren und in Montageposition spielfrei festhalten, ohne gesonderte Befestigungselemente wie Schrauben oder Überrastelemente das Getriebegehäuse präzise und sicher mit dem Motorgehäuse verbindbar ist.

Weitere Volumenreduzierung des Akkuschraubers wird durch kompakte Bauweise des Getriebes und Getriebegehäuses erreicht, wobei das Getriebe als Planetengetriebe lediglich in das zylindrische Gehäuse eingelegt und durch ein Axialsicherungsblech am Herausfallen gehindert wird, wobei zudem das Gehäuse mit einer Innenverzahnung selbst als Sonnenrad dient.

Dadurch, dass das dem Getriebe zugeordnete Motorwellenende mit eine Abflachung, vorzugsweise als Zweiflach, ausgestaltet ist und die entsprechende Eingriffsöfnung der Getriebeeingangswelle für diesen Zweiflach dessen entsprechende Negativform hat, ist eine einfache, leicht montierbare, kompakte Kupplung zwischen Motor und Getriebe geschaffen, die auch grobe Toleranzen zuläßt und dabei zuverlässig arbeitet.

Das Getriebegehäuse ist zugleich das Außenrad des Planetengetriebes. Dadurch wird ein zusätzliches Bauteil gespart und das Geräte schlank und kompakt mit geringem Eckenmaß (Spindelachse zur Außenkontur). Dabei sind die Zahnquerschnitte bzw. die Zahnhöhe des Außenrades des Planetengetriebes (Getriebegehäuse) zugleich Anschlag einer Sicherungsscheibe, die als Axialsicherung dient und die motorseitige Begrenzung der Planetenräder der ersten Stufe bildet. Die Sicherungsscheibe hat zwei über ihren Umfang ragende Flügel, die bajonettverschkussartig in zwei entsprechende Vertiefungen des Getriebegehäuse rastbar und durch Verdrehen in einer

anschließenden Ringnut gegen axiales Lösen sicherbar sind. Dies ist zugleich eine Transportsicherung für das gesondert zulieferbare Getriebe. Die Scheibe wird im eingebauten Zustand jeweils durch ihre Flügel zwischen dem Motor und dem Getriebegehäuses gehalten. Es ist auch eine Sicherungsscheibe mit abstehenden, abgewinkelten Flügeln verwendbar, die in die Vertiefungen durch Einpressen sicherbar sind.

Das Planetengetriebe ist mit einem Autolock-System versehen, d.h. mit selbstarretierender Abtriebsspindel bei Drehen derselben durch Kraftangriff von Außen. Dessen Getriebegehäuse besitzt motorseitig oben und unten axiale Verlängerungen mit einer Ringnut und einem Ringwulst. In diese Ringnut greifen die Ringwulste der Halbschalen ein, die ein entsprechendes Gegenprofil besitzen. Damit wird das Getriebegehäuse ohne weitere Bauteile wie Schrauben, Nieten oder Überrastzungen von jeder Halbschale des Motorgehäuses unverlierbar einrastbar aufgenommen und radial und axial spielfrei fixiert. Seitlich, wo das Getriebe zwischen diesen Verlängerungen Aussparungen aufweist, ragen axiale Gegen-Verlängerungen der Halbschalen hinein. Diese Anordnung dient als Verdrehsicherung des Getriebegehäuses gegenüber dem Motorgehäuse - ohne Verwendung gesonderter Bauteile. Die axialen Verlängerungen sind asymmetrisch, um eine eindeutige Montage zu gewährleisten.

Weitere Gewichts- und Volumenreduzierung des Akkuschraubers wird durch Verzicht auf ein Spannfutter erreicht, wobei mittels Innensechskant der Abtriebswelle - passend für entsprechende Schraub- oder Bohrbits mit Sechskantschaft - diese Werkzeuge schnell und einfach wechselbar sind.

Da die Li-Ion-Zelle fast keine Selbstentladung hat, ist der Akkuschrauber auch nach langen Benutzungspausen voll einsatzbereit, wobei in Benutzungspausen der Akkuschrauber beliebig lange auf der Ladeschale im Lademodus ruhen kann. Dabei ist die Ladeschale standsicher auf eine ebene Ablagefläche stellbar und muss nicht befestigt und auch nicht festgehalten werden, wenn der Akkuschrauber entnommen wird. Dadurch ist er immer mit nur einer Hand schnell entnahmebereit, wobei kein Stecker gezogen oder keine Halterung entfernt werden muss. Außerdem ist jederzeit automatisch sichergestellt, dass der Akkuschrauber geladen wird.

Die kompakte Li-Ion-Zelle sitzt spielfrei lagegesichert verspannt im Inneren der halbschalenartigen Handgriffbereiche, wobei an ihren Endbereichen zwei angeschweißte Kontaktfahnen mit elektrischen Zuleitungen zur Platine verlötet sind. Sie ist in die Festigkeitsstruktur des Handgriffs integriert und erhöht dessen Formsteifigkeit bei geringem Materialeinsatz für die Halbschalen des Gehäuses.

Die für die Steuerung vorgesehene Platine ist Chassis der Einschaltkontakte, der Ladekontaktzungen, des Schiebeschalters für Richtungsumkehr sowie der 2 Leuchtdioden für die Drehrichtungsanzeige und der Steuerungsmittel des Lade- und Entladestroms der Li-Ion-Zelle. Längs im Inneren des Handgriffs angeordnet ist auch die Platine als zusätzliche Querrippe in die Festigkeitsstruktur des Gehäuses bzw. des Handgriffs integriert und erhöht dessen Biegesteifigkeit erheblich.

Statt eines in dieser Klasse üblichen kastenartigen Ein-Aus-Schalters, der jeweils eine Position für Rechts- bzw. Linkslauf hat, wurde das Konzept getrennter rechts-/Linkslauf-Vorwahl übernommen. Während bei bisherigen Bohrschraubern dazu eine gesonderte Baugruppe auf den kastenartigen Hauptschalter aufgesetzt ist, wird hier ein auf die Platine gelöteter, einfacher und kostengünstiger Schiebeschalter, z.B. Massenware aus dem Elektronikhandel - über den üblichen Schieber von Hand ansteuerbar und damit eine einfach aufgebaute Drehrichtungsumschaltung geschaffen.

Ein-Ausschalt-Taste und Drehrichtungsumschalter sind so gestaltet, dass zum einen bei gedrückter Ein-Ausschalt-Taste der Drehrichtungsumschalter gesperrt ist und nicht bewegt werden kann und zum anderen die Ein-Ausschalt-Taste gesperrt ist und nicht in Einschaltposition gedrückt werden kann, wenn der Drehrichtungsumschalter in der Mittelstellung, der empfohlenen Transportstellung, steht.

Die auf der Platine aufgelöteten Ladekontaktzungen ragen durch Öffnungen im unteren Ende des Handgriffs und werden in Ladestellung von Gegenkontakten der Ladeschale kontaktiert, wobei keine zusätzlichen Kabel oder Kupplungsstecker betätigt werden müssen.

Je nach Drehrichtung des Motors leuchtet eine grüne oder rote auf die Platine gelötete Leuchtdiode auf. Diese sind durch mittels transparentem Kunststoffteil als Fenster überdeckte Öffnungen im Gehäuse hindurch sichtbar.

Das Getriebegehäuse, die Platine mit Akku, Motor, Leuchtdioden und elektrischen Elementen sowie der Schalterdrücker mit Kontaktblech und Federn und das transparente Kunststoffteil werden in eine erste Halbschale gelegt, mit der zweiten Halbschale geschlossen und mit nur vier gleichen Schrauben geschlossen und damit komplett montiert und ergeben eine sehr kostengünstige Lösung.

Die sehr kompakte Bauform macht es möglich, das Gerät vorn am Getriebegehäuse bzw. am angrenzenden Motorgehäuse so in einer Hand zu halten, dass dabei mit deren Zeigefinger eine Schraube auf den Bit zu halten ist, wobei zugleich die großflächige Ein-Ausschalt-Taste bequem mit den übrigen Fingern bedienbar ist, wobei zudem die freie Hand das Werkstück halten kann.

Durch die Verwendung nur einer einzigen langen und schlanken fest im Handgriff des Akkuschraubers eingebauten Lithium-Ionen (Li-Ion)-Zelle anstelle mehrerer 4/5 Sub-C Nickel-Cadmium-Zellen als Akku kann ein besonders kleiner Griffumfang erreicht werden. Eine deutlich reduzierte, äußerst handliche Baugrösse im "Damenrevolverformat" wird darüberhinaus durch Ersatz einer üblichen, kastenartigen Schalter-Baueinheit durch ein nur etwa 10% dessen Volumens beanspruchenden, mit der Ein-Ausschalt-Taste verbundenes Kontaktblech erreicht, das zwei Gegenkontakte bei Verschieben der Taste miteinander elektrisch verbindet. Das Kontaktblech ist dazu in die Ein-Ausschalt-Taste geschraubt.

Zwei relativ große, harte Spiralfedern halten die Ein-Ausschalt-Taste vorgespannt in Ihrer Ausschalt-Position und verhindern durch schnelles Öffnen bzw. Schließen der Kontakte bei deren über die Lebensdauer zunehmender Hochohmigkeit deren Verschweißen mit dem Kontaktblech.

Die lange Ein-Ausschalt-Taste hat einen kurzen Betätigungshub und ist dadurch an jeder beliebigen Stelle zuverlässig einschaltend besonders leicht betätigbar. Dadurch sind - unabhängig von der Betätigungsposition - nur geringe Bedienkräfte nötig und das Gerät kann bequem in nahezu jeder Position der Bedienhand eingeschaltet werden. Um die Führung der Ein-Ausschalt-Taste gegenüber dem Gehäuse zu verbessern, hat sie zwei seitliche Führungszungen auf ihrer Innenseite, die im Gehäuse abgestützt gleitgelagert sind.

Die großflächige und wulstig abstehende Gummiummantelung mit Noppenfläche über dem gesamten Griffbereich läßt den Akkuschrauber besonders griffsicher in der Bedienhand eingepaßt ruhen.

### Zeichnungen

Nachstehend ist die Erfindung anhand eines Ausführungsbeispiels mit zugehöriger Zeichnung näher erläutert.

Es zeigen
Figur 1 eine Seitenansicht des teilweise geöffneten Akkuschraubers
Figur 2 eine Frontansicht des Akkuschraubers
Figur 3 eine Seitenansicht des in einer Ladeschale positionierten Akkuschraubers
Figur 4 einen vergrößerten Ausschnitt aus Figur 1 auf die Schalttaste
Figur 5 einen vergrößerten Ausschnitt des Getriebegehäuses aus Figur 1
Figur 6 eine Ansicht gemäß Figur 1 leicht gedreht
Figur 7 eine Ansicht gemäß Figur 6, leicht gedreht
Figur 8 eine räumliche Ansicht des Getriebegehäuses von vorn
Figur 9 eine räumliche Ansicht des Getriebes von hinten
Figur 10 eine räumliche Ansicht der Ladeschale von oben

### Beschreibung des Ausführungsbeispiels

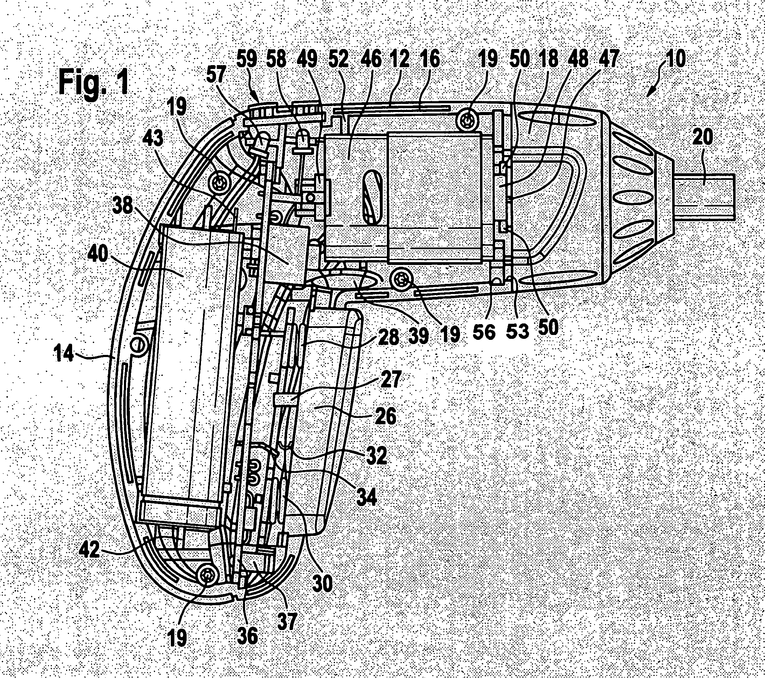

Figur 1 zeigt einen pistolenartigen Akkuschrauber 10 mit zur Schraubrichtung fluchtendem Motorgehäuse 12 und davon abgewinkeltem Handgriff 14. Das Motorgehäuse 12 mit Handgriff 14 wird aus zwei Halbschalen 16, 17 gebildet, die in einer Mittenebene 15 dicht aneinander abgestützt zusammenfügbar sind. Dazu greifen vier Schrauben durch Bohrungen der einen Halbschale 17 in vier Schraubdome 19 der anderen Halbschale 16 und halten beide aneinander fest.

Eine Ein-Ausschalttaste 26 ist annähernd über die gesamt innere Länge des Handgriffs 14 verlaufend angeordnet. Maschinenseitig bildet die Ein-Ausschalttaste 26 mit einem angeschraubten Kontaktblech 32 in Verbindung mit maschinenseitig fest angeordneten Gegenkontakten 34 einen Ein- und Ausschalter, so dass sich ein gesonderter, handelüblicher kastenartiger Standard-Schalter bzw. Taster erübrigt. Die Ein-Ausschalttaste 26 erlaubt wegen ihrer besonderen Länge ein bequemes Ein- und Ausschalten auch in schwierigen Haltepositionen des Akkuschraubers 10. Sie ist an ihren Längsseiten mit seitlichen in den Handgriff 14 tretenden Stützzungen 27 versehen, die an entsprechenden Gegenflächen der Halbschalen 16, 17 eine sichere Führung bilden und ein präzises, spielfreies Hin- und Her-Bewegen ermöglichen.

Über zwei harte Druckfedern 28, 30 ist die Ein-Ausschalttaste 26 am Handgriff 14 elastisch abgestützt, so dass nach dem Einschalten die Federn 28, 30 die Ein- und Ausschalttaste 26 bei deren Loslassen selbsttätig in ihre Aus-Position zurückbefördern, die Kontakte 32, 34 trennen und die Motorbewegung stoppen. Der Betätigungshub ist durch nicht näher bezeichnete Anschläge begrenzt und ist mit 1 bis 4 mm sehr kurz und bedienfreundlich.

Zum Eintritt der Ein-Ausschalt-Taste 26 in das Motorgehäuse 12 ist eine entsprechende jeweils hälftig in den Halbschalen 16, 17 angeordnete Öffnung 29 vorgesehen, die die Ein-/Ausschalttaste 26 schachtartig führend eng umgreift. Die Ein-Ausschalttaste 26 trägt auf ihrer dem Handgriff 14 zugewandten Stirnseite oben und unten je eine längs überstehende Zunge, die die Öffnung 29 überragen und sich von innen an deren Rand abstützen und die Ein-Ausschalttaste 26 in der Ausschaltposition daran abstützend festhalten und Lösen aus dem Gehäuse 12 hindern.

Die dem Kontaktblech 32 zugeordneten Gegenkontakte 34 sind auf einer länglichen, sich im Inneren des Handgriffs 14 erstreckenden Platine 36 dem Kontaktblech 32 gegenüberliegend und in dessen Hubbereich angeordnet. Außerdem trägt die Platine 36 in ihrem unteren Bereich zwei symmetrisch angeordnete Ladekontaktzungen 37, die rechtwinklig aus der Ebene der Platine 36 austreten und dann jeweils am Ende nach außen abgewinkelte große Auflageflächen bilden. Diese durchtreten jede Halbschale 16, 17 symmetrisch zur Mittenebene 15 im unteren Ende des Handgriffs 14. Dabei sind sie an jeder Durchtrittsstelle in je einer Vertiefung innerhalb der Handgriffkontur "versenkt" eingebettet und für die nach außen überstehenden Ladekontakte 23 der Ladeschale 22 zugänglich, die sie im Ladezustand bei Auflage auf der Ladeschale 22 übergreifen und sich aufgrund deren federnder Anordnung sicher kontaktiert abstützen.

Des weiteren trägt die Platine 36 etwa mittig, flach und flächennah nicht näher bezeichnete Störwiderstände und Kondensatoren und im oberen Bereich den Schiebeschalter 38 sowie am oberen Ende zwei Leuchtdioden 57, 58 zur optischen Anzeige der Drehrichtung. Die Platine 36 ist mit ihrer Längsseite parallel zum Handgriff 14 und mit ihrer Schmalseite quer zur Mittenebene 15 angeordnet und dabei in nicht näher bezeichneten nutartigen Aussparungen der beiden Halbschalen 16, 17 spielfrei so geklemmt, dass sie sich von Innen gegen die Halbschalen 16, 17 stützt und dadurch eine Verstärkungsrippe im Handgriff 14 bildet. Parallel zur Platine 36 ist im Handgriff 14 eine Lithium-Ionen-Zelle mit den bekannten Vorteilen als Akku 40 eingelegt, der von den beiden Halbschalen 16, 17 im Montagezustand zangenartig umgriffen und lagegesichert wird und damit in die Festigkeitsstruktur des Gehäuses 12 integriert ist. Der Akku 40 weist oben und unten jeweils ein als Lötfahne dienendes Kontaktblech 42, 43 auf, das mit der Platine 36 verdrahtet ist.

Oberhalb der Ein-Ausschalttaste 26 - im Zwickel zwischen abgewinkeltem Handgriff 14 und Motorgehäuse 12 - ist ein Schiebetaster 39 quer zur Mitteneben 15 des Motorgehäuses 12 durch nicht bezeichnete, seitliche Öffnungen der Halbschalen 16 17 hin- und herschiebbar angeordnet. Der Schiebetaster 39 umgreift mit einer nicht näher bezeichneten etwa mittigen Aussparung gabelartig ein Schiebeorgan 41 eines kastenartigen, im oberen Bereich der Platine 36 fixierten Schiebeschalters 38. Das auf den Schiebeschalter 38 aufgesetzte Schiebeorgan 41 ist über den Schiebetaster 39 in die äußerste linke und rechte Seitenposition und in eine Mittenposition verstellbar.

Ein gleichstrombetriebener Motor 46 im vorderen Bereich des Motorgehäuses 12 wird von den Halbschalen 16,17 nach deren Montage zangenartig umgriffen und in seiner Arbeitslage spielfrei, parallel zum im Motorgehäuse 12 eingelegten Getriebegehäuse 18 fluchtend ausgerichtet gehalten. Der Motor 46 hat einen hinteren und vorderen stufenartigen Motorbund 48, 49, aus dem das hintere und vordere Ende der Motorwelle 45 austritt. Der Motor 46 ist über seinen vorderen und hinteren Motorbund 48, 49 in entsprechenden lagerbockartigen Rippen der Halbschalen 16, 17 zentriert abgestützt gelagert. Das vordere Ende 47 der Motorwelle 45 ist mit einer Abflachung bzw. mit einem Zweiflach versehen, insbesondere umgeformt, und greift damit in der Montagelage in eine entsprechende abgeflachte Ausnehmung eines Eingangsritzels 66 des im Getriebegehäuse 18 angeordneten Getriebes 65, das als Planetengetriebe ausgestaltet ist. Damit ist eine kraftschlüssige Kupplung mit grober Maßtoleranz und einfacher Montagemöglichkeit geschaffen, wobei der Motor 46 mit dem Getriebe 65 bzw. dem Getriebegehäuse 18 leicht zusammensteckbar ist und zusammengesteckt zur weiteren Montage in eine der Halbschalen 16, 17 einlegbar ist.

Stirnseitig umgreifen die beiden Halbschalen 16, 17 zangenartig und formschlüssig ein als separate zylindrische Baugruppe montiertes Getriebegehäuse 18 und halten es spielfrei fest. Dieses hat in zwei axialen, sich zum Motorgehäuse 12 erstreckenden, zungenartigen, teilzylindrischen Verlängerungen 60 eine Gehäuseringnut 54, die von einem Ringwulst 55 begrenzt wird. Der Ringwulst 55 greift in eine passende Gegenringnut 56 innen an der Stirnseite der Halbschalen 16, 17 des Motorgehäuses 12, wobei passende Gegenringwulste 53 der Halbschalen 16, 17 formschlüssig in die Gehäuseringnut 54 des Getriebegehäuses 18 greifen.

In die zwei asymetrischen Aussparungen zwischen den zwei Verlängerungen 60 des Getriebegehäuses 18 greifen quer zur Längsrichtung des Motorgehäuses 12 abgewinkelte Gegenverlängerungen 61 fehlmontagesicher, spielfrei ein, die zugleich lagerbockartig den Motorbund 58 des Motors 46 zentrierend abstützen, so dass auch dieser in die Festigkeitsstruktur des Motorgehäuses 12 integriert ist. Gesonderte Befestigungselemente wie Schrauben oder dergleichen sind dabei unnötig. Dies erleichtert die Montage bei verringerter Anzahl von Einzelteilen.

Oben hinten trägt das Motorgehäuse 12 ein eingelegtes transparentes Fenster 59, das sich in der Trenneben längs erstreckt und mittig geteilt ist. Es gibt durch zwei Durchbrüche der Halbschalen 16, 17 den Blick auf eine blaue bzw. rote Leuchtdiode 57, 58 frei, jede einer Drehrichtung der Motorwelle 45 zugeordnet und mit dieser aufleuchtend.

Aus dem vorn zu einem abgerundeten Kegel zulaufenden Getriebegehäuse 18 tritt vorn eine Abtriebsspindel 20, die stirnseitig als Innensechskant 21 zur Aufnahme passender Standardbits ausgestaltet ist. Der Innensechskant 21 ist mit Mitteln versehen, die den eingeschobenen Schraubbit oder Bohrbit gegen Verlieren festhalten, so dass für deren axiale Entnehmen ein gewisser Widerstand von Hand überwunden werden muss.

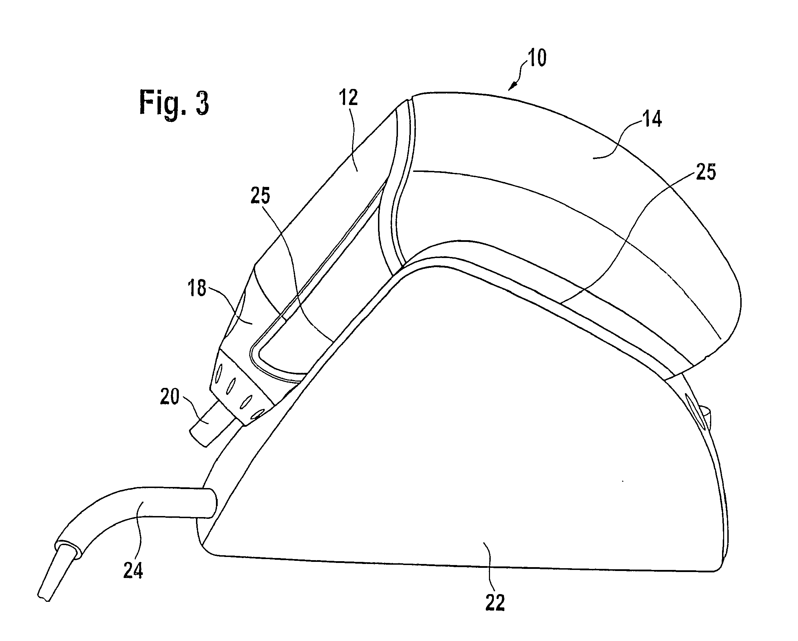

Figur 3 zeigt eine verhältnismäßig schmale, kastenartige Ladeschale 22, deren Außenkontur schrägflächig der pistolenförmigen Innen- bzw. Außenkontur des Akkuschraubers 10 angeglichen und nutartig vertieft ist. Der Akkuschrauber 10 kann daher mit seiner Innenseite in passende Einbettungen 25 für den Handgriff 14 bzw. des Motor- und Getriebegehäuse 12 und 18 spielfrei eintreten, und durch sein Eigengewicht gesichert lagern, wobei die Kontaktierung zwischen seinen Ladekontaktzungen 38 und den Ladekontakten 23 der Ladeschale 22 besonders sicher ist.

Die Ladekontakte 23 ragen aus der Kontur der Ladeschale 23 heraus, so dass der Akkuschrauber 10 mit seinem Handgriff 14 in eine entsprechende Aussparung der Ladeschale 12 rastet und sich dabei mit seinem Eigengewicht mit seinen Ladekontaktzungen 37 an den federnden Ladekontakten 23 der Ladeschale 22 abstützt. Allein durch Auflegen des Akkuschraubers 10 auf die Ladeschale 22 stellt sich sofort der Ladezustand mit hörbarem Klicken ein.

Die Ladeschale 22 weist in Betrachtungsrichtung links einen nicht näher bezeichneten elektrischen Steckkontakt zum Einführen eines Elektroanschlusskabels 24 zur Stromversorgung der Ladeschale 22 auf, die im hinteren, dem Handgriff 14 des Akkuschraubers 10 zugeordneten Bereich eine Ladekontrollleuchte 71 und eine senkrechte Einstecköffnung 73 zur Halterung eines Schraub- bzw. Bohrbits trägt.

Der Akkuschrauber 10 ruht mit seiner Innenseite, insbesondere mit seiner Ein-Ausschalttaste 26 auf der Oberseite einer Ladeschale 22 und nimmt dort im Aufliegen automatisch eine sichere Ladeposition ein, sofern die Ladeschale 22 mit dem Kabel 24 an eine passende Stromversorgung angeschlossen ist.

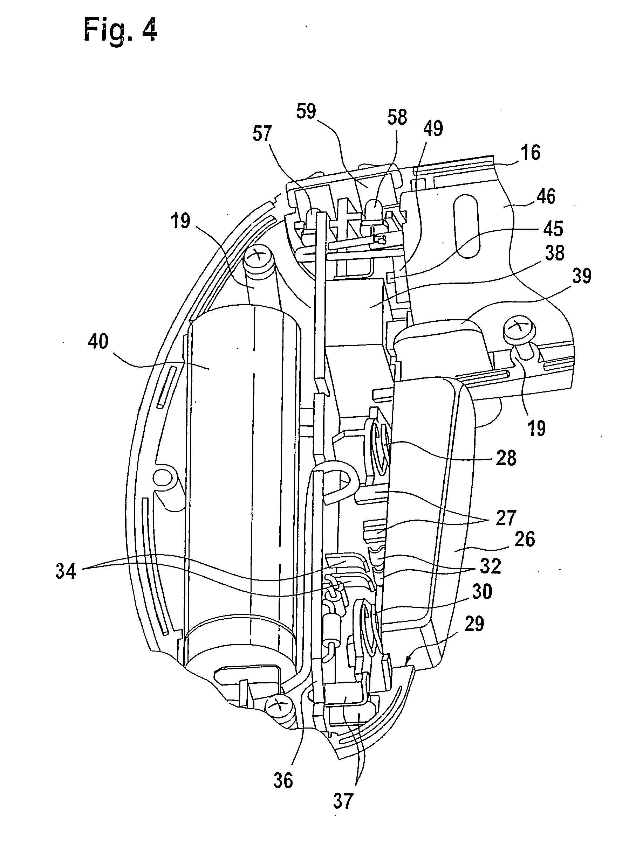

Figur 4 zeigt eine ausschnittsweise Vergrößerung der ersten Halbschale 16 mit den eingefügten Einzelteilen gemäß Figur 1, wobei die Ausgestaltung des Akkus 40 mit angrenzenden Teilen sowie der Platine 36 mit den daran befestigen Teilen sowie der Ein-Ausschalttaste 26 deutlich erkennbar ist.

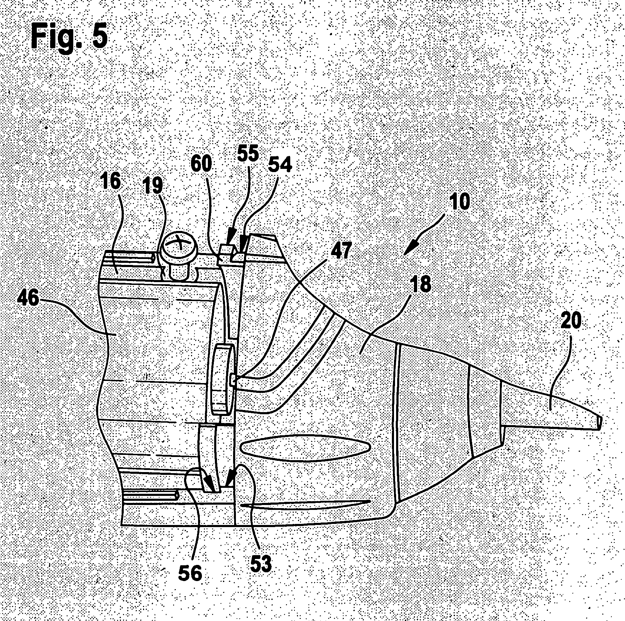

Figur 5 zeigt ausschnittsweise den vorderen Bereich des Akkuschraubers 10 mit der unteren Halbschale 16 mit Blick auf den Motor 46 und das Getriebegehäuse 18 - formschlüssig eingelegt.

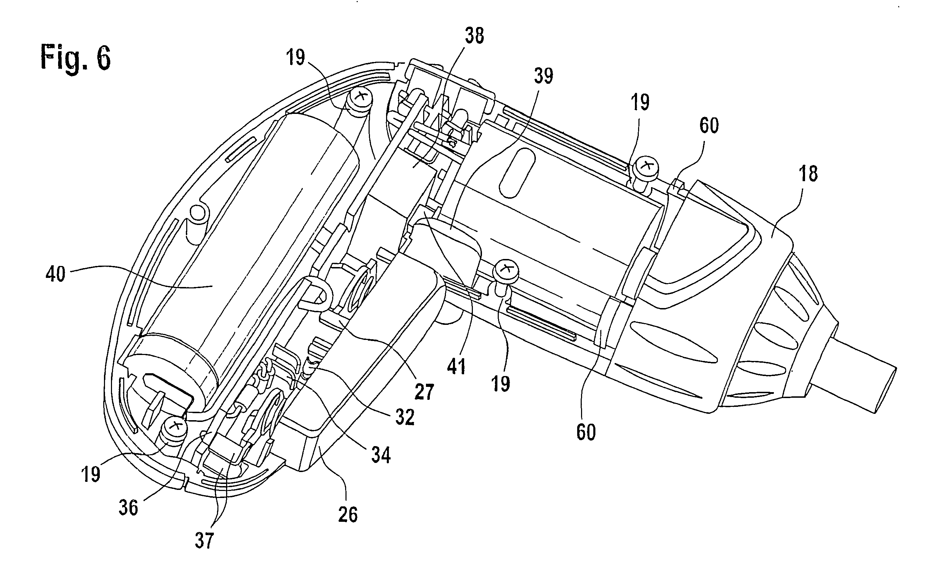

Figur 6 zeigt eine perspektivische Ansicht gemäß Figur 1 mit den entsprechenden Einzelheiten gemäß Figur 1, wobei über diese hinaus der Schiebetaster 39 zur Drehrichtungsumschaltung deutlicher erkennbar ist, der in seiner Mittenposition zugleich eine Einschaltsperre zum Betätigen der Ein-/Ausschalttaste 26 bildet. Dadurch ist in dieser Position ein ungewolltes Betätigen z.B. beim Transport in der Hosentasche nicht möglich.

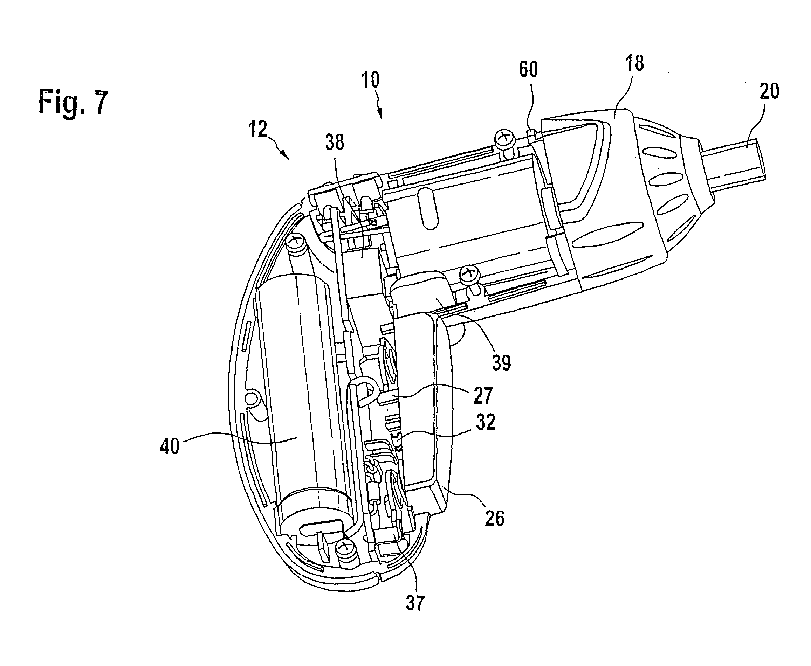

Figur 7 zeigt eine weitere räumliche Darstellung gemäß den Figuren 1 und 6, wobei die dazu beschriebenen Einzelheiten mit Hinweis auf diese Figuren nicht nochmals wiederholt werden, sondern deren Verständnis verbessern sollen.

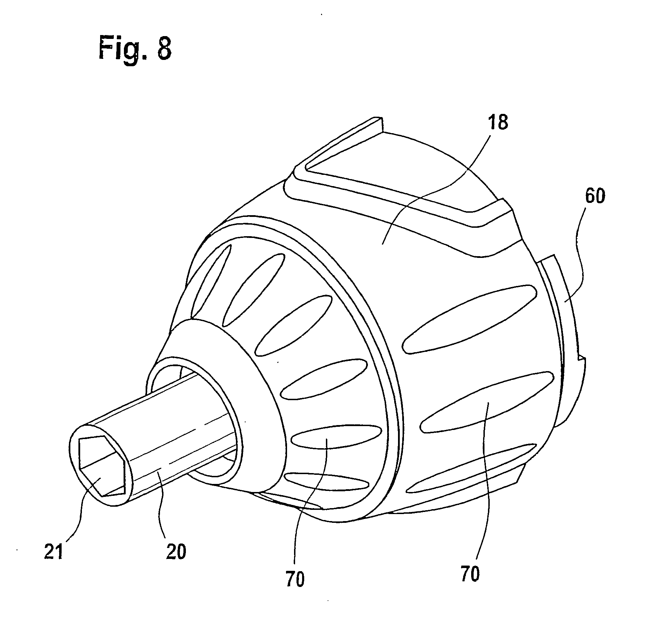

Figur 8 zeigt die Stirnseite des Getriebe gehäuses 18 als Einzelheit mit eingebautem Getriebe 65 sowie der vorn herausragenden Abtriebswelle 20 mit dem Innensechskant 21 sowie den vorn Getriebegehäuse 18 nach hinten ragenden axialen Verlängerungen 60, wobei regelmäßige ovale Vertiefungen 70 auf der Außenseite des Getriebegehäuses 18 dessen Griffigkeit erhöhen.

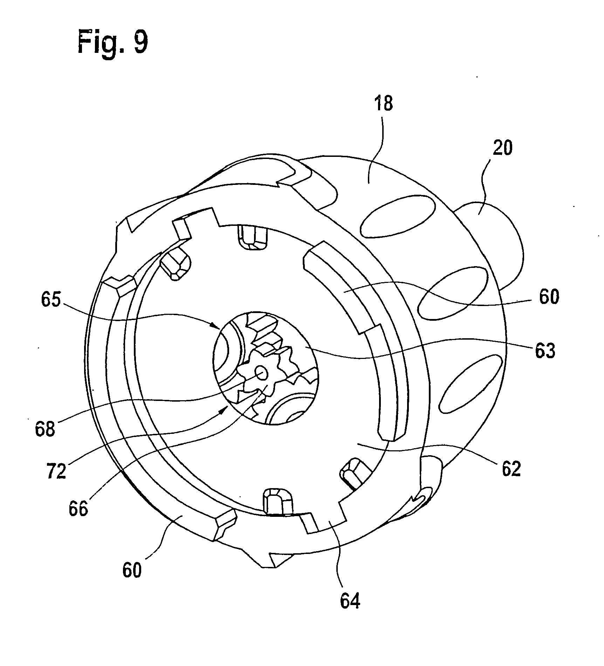

Figur 9 zeigt das hinten zylindrische Getriebegehäuse 18 gemäß Figur 8 in seiner Ansicht von hinten, wobei die beiden axialen Verlängerungen 60 und deren Zwischenräume, eine quer im Inneren des Getriebegehäuses 1 8 verrastete, über dessen gesamten Innendurchmesser reichende Federscheibe 62 mit einer Mittenöffnung 63 erkennbar sind.

Die Federscheibe 62 weist radial überstehende Flügel 64 auf, mit denen sie bajonettartig in entsprechende Aussparungen im Umfang des hinteren Endes des Getriebegehäuses 18 einlegbar und durch Verdrehen bzw. Verstemmen darin verrastbar ist.

Durch die Mittenöffnung 63 hindurch ist die Eingangswelle 66 des Getriebes 65 für den Eingriff der Motorwelle 47 zugänglich und mit deren abgeflachten Ende kuppelbar, so dass deren Drehmitnahme sicher erfolgen kann. Die Eingangswelle 66 hat eine Mittenausnehmung 68, die die Negativform des abgeflachten Endes der Motorwelle 47 bildet.

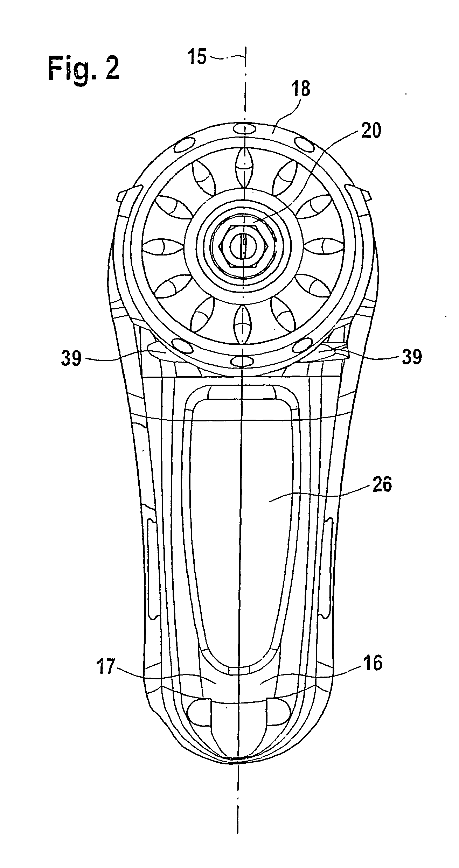

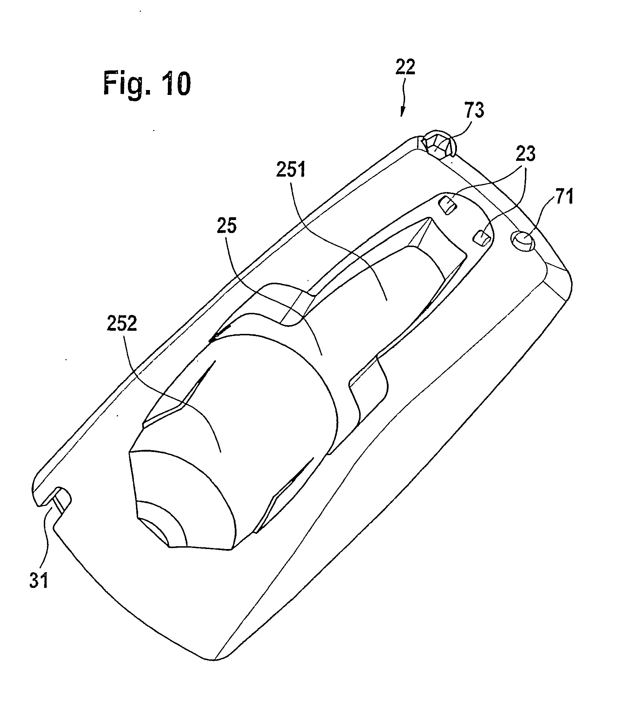

Figur 10 zeigt eine Draufsicht von oben auf die Ladeschale 22 mit Blick auf die Einbettung 25, die in eine Handgriffbettung 25 1 und einer Getriebegehäusebettung 252 unterteilt ist, so dass der Akkuschrauber 10 bündig und nahezu spielfrei eindeutig und narrensicher so in die Ladeschale 22 einlegbar ist, dass er sicher aufliegt und seine Ladekontaktzungen 37 (Figur 1, 2, 4, 6, 7) sicheren Kontakt mit den Ladekontakten 23 der Ladeschale 22 behalten.

## Patentansprüche

1. Akkuschrauber mit einem aus Halbschalen (16, 17) zusammengesetzten Motorgehäuse (12) mit Akku (40), an das sich ein Getriebegehäuse (18) mit darin gelagertem Getriebe (72) mit einer Abtriebsspindel (20) anschließt, wobei die Halbschalen (16, 17) des Motorgehäuses (12) an ihren c-förmigen, an das Getriebegehäuse (18) anschließenden Enden einen innen eingeprägten, ringartigen Gegenringwulst (53) sowie eine Gegenringnut (56) aufweisen, **dadurch gekennzeichnet, dass** das Getriebegehäuse (18) sich zum Motorgehäuse (12) erstreckende, axiale, zungenartige, teilzylindrische Verlängerungen (60) mit einer äußeren Gehäuseringnut (54), die von einem Ringwulst (55) begrenzt wird, aufweist, und die Halbschalen (16, 17) des Motorgehäuses (12) allein mit ihren c-förmigen, an das Getriebegehäuse (18) anschließenden Enden die zungenartigen Verlängerungen (60) des Getriebegehäuses (18) zangenartig und formschlüssig umgreifen, wobei der Ringwulst (55) des Getriebegehäuses (18) in die Gegenringnut (56) des Motorgehäuses (12) greift, und wobei die Gegenringwulste (53) der Halbschalen (16, 17) des Motorgehäuses (12) in die Gehäuseringnut (54) des Getriebegehäuses (18) greifen, und Gegenverlängerungen (50) des Motorgehäuses (12) quer zur Längsrichtung des Motorgehäuses (12) zwischen die Verlängerungen (60) des Getriebegehäuses (18) greifen, und das Getriebegehäuse (18) zentriert und verdrehfest an das Motorgehäuse ankoppeln.

2. Akkuschrauber nach Anspruch 1, **dadurch gekennzeichnet, dass** gegenseitig radial ineinandergreifenden Nut-Feder-Verbindungen (60, 53, 54, 55, 56, 60, 97) zwischen dem zylindrischen, einstückigen Getriebegehäuse (18) und den Halbschalen (16, 17) des Motorgehäuses (12) angeordnet sind, wobei deren Außenkonturen bündig an einer kreisförmigen Stoßstelle ineinander übergehen.

3. Akkuschrauber nach Anspruch 1, **dadurch gekennzeichnet, dass** die Nut-Feder-Verbindungen Radialsteckverbindungen zwischen den Halbschalen (16,17) bilden, derart, dass das Getriebeghäuse (18) durch radiales Stecken in eine der nach oben offen positionierten Halbschalen (16, 17) herausfallsicher mit dieser verbunden ist.

4. Akkuschrauber nach Anspruch 1, **dadurch gekennzeichnet, dass** das dem Getriebe (72) zugeordnete Motorwellenende (47) mindestens eine Abflachung hat, vorzugsweise zwei, wobei eine Eingriffsöffnung (66) der Getriebeeingangswelle dessen entsprechende Negativform hat.

5. Akkuschrauber nach Anspruch 1, **dadurch gekennzeichnet, dass** das Getriebe (72) als Planetengetriebe in;ein hohlzylindrisches Getriebegehäuse (18) eingesetzt und darin durch ein Federscheibe (62) bzw. ein Axialsicherungsblech lagesicherbar ist, wobei zudem das Getriebegehäuse (18) mit einer innenverzahnung versehen ist und als Sonnenrad dient.

6. Akkuschrauber nach Anspruch 1, **dadurch gekennzeichnet, dass** sich die Federscheibe (62) an der Innenverzahnung des Getriebegehäuses (18) abstützt.

7. Akkuschrauber nach Anspruch 1, **dadurch gekennzeichnet, dass** die Federscheibe (62) zwei über ihren Umfang ragende Flügel (64) hat, die bajonettverschlussartig in zwei entsprechende axiale Vertiefungen des Getriebegehäuses (18) rastbar und/oder einpreßbar und/oder durch Verdrehen gegen axiales Lösen sicherbar sind.

8. Akkuschrauber nach Anspruch 1, **dadurch gekennzeichnet, dass** das Planetengetriebe (72) mit einem Autolock-System versehen ist, so dass sich die Abtriebsspindel (20) bei Wirken eines Drehmoments von außen dreharretiert.

9. Akkuschrauber nach Anspruch 1, **dadurch gekennzeichnet, dass** die zungenartigen axialen Verlängerungen (60) des Getriebegehäuses (18) mit Ringnut (54) und Ringwulst (53) oben und unten angeordnet sind.

10. Akkuschrauber nach Anspruch 1, **dadurch gekennzeichnet, dass** die axialen Verlängerungen (60) des Getriebegehäuses (18) und die Vorsprünge (50, 51) des Motorgehäuses (12) asymmetrisch angeordnet sind, um eine Fehlmontage zu vermeiden.

11. Akkuschrauber nach Anspruch 1, **dadurch gekennzeichnet, dass** der Motor und/oder das Getriebegehäuse und/oder der Akku und/oder die Platine im Inneren der Halbschalen in die Festigkeitsstruktur des Motorgehäuses (12) bzw. des Handgriffs (14) so integriert sind, dass sie dessen Formsteifigkeit bei minimalem Materialeinsatz erhöhen.

12. Akkuschrauber nach Anspruch 1, **dadurch gekennzeichnet, dass** an jeder Halbschale (16, 17) am Handgriff (14) eine großflächige, wulstartig abstehende Gummiummantelung mit Noppenstruktur angeordnet ist.

## Claims

1. Cordless screwdriver comprising a motor housing (12), composed of half shells (16, 17), with battery (40), adjoining which motor housing (12) is a gear housing (18) with a gearing (72) mounted therein having an output spindle (20), wherein the half shells (16, 17) of the motor housing (12), at their c-shaped ends adjoining the gear housing (18), have a ring-like mating annular bead (53), impressed inwards, and a mating annular groove (56), **characterized in that** the gear housing (18) has axial, tongue-like, partly cylindrical extensions (60) extending towards the motor housing (12) and having an outer housing annular groove (54) which is defined by an annular bead (55), and the half shells (16, 17) of the motor housing (12) enclose the tongue-like extensions (60) of the gear housing (18) in a pincer-like and positive-locking manner solely with their c-shaped ends adjoining the gear housing (18), wherein the annular bead (55) of the gear housing (18) engages in the mating annular groove (56) of the motor housing (12), and wherein the mating annular beads (53) of the half shells (16, 17) of the motor housing (12) engage in the housing annular groove (54) of the gear housing (18), and mating extensions (50) of the motor housing (12) engage between the extensions (60) of the gear housing (18) transversely to the longitudinal direction of the motor housing (12) and couple the gear housing (18) to the motor housing in a centred and rotationally fixed manner.

2. Cordless screwdriver according to Claim 1, **characterized in that** slot-and-key joints (60, 53, 54, 55, 56, 60, 97) mutually engaging radially one inside the other are arranged between the cylindrical, one-piece gear housing (18) and the half shells (16, 17) of the motor housing (12), wherein their outer contours merge into one another in a flush manner at a circular abutting location.

3. Cordless screwdriver according to Claim 1, **characterized in that** the slot-and-key joints form radial push-in connections between the half shells (16, 17) in such a way that the gear housing (18), by being pushed radially into one of the half shells (16, 17), which is positioned such as to be open upwards, is connected to said half shell in such a way that it cannot fall out.

4. Cordless screwdriver according to Claim 1, **characterized in that** the motor shaft end (47) assigned to the gearing (72) has at least one flat, preferably two flats, wherein an engagement opening (66) of the gearing input shaft has a negative form corresponding to said flat.

5. Cordless screwdriver according to Claim 1, **characterized in that** the gearing (72) is inserted as an epicyclic gearing into a hollow-cylindrical gear housing (18) and can be secured in position therein by a spring washer (62) or an axial tab washer, the gear housing (18) additionally being provided with an internal tooth system and serving as sun gear.

6. Cordless screwdriver according to Claim 1, **characterized in that** the spring washer (62) is supported on the internal tooth system of the gear housing (18).

7. Cordless screwdriver according to Claim 1, **characterized in that** the spring washer (62) has two lobes (64) which project beyond its circumference and which, like a bayonet catch, can be latched in place and/or pressed into two corresponding axial recesses of the gear housing (18) and/or can be secured in said recesses by rotation to prevent axial release.

8. Cordless screwdriver according to Claim 1, **characterized in that** the epicyclic gearing (72) is provided with an autolock system, such that the output spindle (20) is locked against rotation when a torque acts from outside.

9. Cordless screwdriver according to Claim 1, **characterized in that** the tongue-like axial extensions (60) of the gear housing (18) with annular groove (54) and annular bead (55) are arranged at the top and bottom.

10. Cordless screwdriver according to Claim 1, **characterized in that** the axial extensions (60) of the gear housing (18) and the projections (50, 51) of the motor housing (12) are arranged asymmetrically in order to avoid incorrect assembly.

11. Cordless screwdriver according to Claim 1, **characterized in that** the motor and/or the gear housing and/or the battery and/or the printed circuit board is/are integrated into the physical structure of the motor housing (12) or of the handle (14) inside the flat shells in such a way that they increase the inherent stability of said motor housing (12) or handle (14) with minimum use of material.

12. Cordless screwdriver according to Claim 1, **characterized in that** a rubber covering which has a large surface area, bulges outwards and has a dimpled structure is arranged on each half shell (16, 17) on the handle (14).

## Revendications

1. Visseuse à batterie comprenant un boîtier moteur (12) constitué de demi-coques (16, 17) avec une batterie (40), à laquelle se raccorde un boîtier d'engrenage (18) à l'intérieur duquel est monté un engrenage (72) avec une broche d'entraînement de sortie (20), les demi-coques (16, 17) du boîtier moteur (12) présentant, à leurs extrémités en forme de C se raccordant au boîtier d'engrenage (18), un bourrelet annulaire conjugué (53) en forme de bague et gaufré à l'intérieur, ainsi qu'une rainure annulaire conjuguée (56), **caractérisée en ce que** le boîtier d'engrenage (18) présente des prolongements (60) partiellement cylindriques, axiaux, de type langues, s'étendant vers le boîtier moteur (12), avec une rainure annulaire de boîtier extérieure (54) qui est limitée par un bourrelet annulaire (55), et les demi-coques (16, 17) du boîtier moteur (12) viennent en prise comme des pinces et par engagement positif, uniquement par leurs extrémités en forme de C se raccordant au boîtier d'engrenage (18), avec les prolongements (60) en forme de langues du boîtier d'engrenage (18), le bourrelet annulaire (55) du boîtier d'engrenage (18) venant en prise dans la rainure annulaire conjuguée (56) du boîtier moteur (12), et les bourrelets annulaires conjugués (53) des demi-coques (16, 17) du boîtier moteur (12) venant en prise dans la rainure annulaire de boîtier (54) du boîtier d'engrenage (18), et des prolongements conjugués (50) du boîtier moteur (12) venant en prise transversalement à la direction longitudinale du boîtier moteur (12) entre les prolongements (60) du boîtier d'engrenage (18), et s'accouplant au boîtier d'engrenage (18) de manière centrée et solidaire en rotation.

2. Visseuse à batterie selon la revendication 1, **caractérisée en ce que** des connexions par rainure et clavette (60, 53, 54, 55, 56, 60, 97) venant en prise les unes dans les autres radialement et mutuellement sont disposées entre le boîtier d'engrenage (18) cylindrique et d'une seule pièce et les demi-coques (16, 17) du boîtier moteur (12), leurs contours extérieurs se prolongeant les uns dans les autres en affleurement en un point d'aboutement circulaire.

3. Visseuse à batterie selon la revendication 1, **caractérisée en ce que** les connexions par rainure et clavette forment des connexions par enfichage radial entre les demi-coques (16, 17), de telle sorte que le boîtier d'engrenage (18), par enfoncement radial dans l'une des demi-coques (16, 17) positionnée de manière ouverte vers le haut, soit connecté à celle-ci de manière imperdable.

4. Visseuse à batterie selon la revendication 1, **caractérisée en ce que** l'extrémité d'arbre du moteur (47) associée à l'engrenage (72) présente au moins un méplat et de préférence deux, une ouverture d'engagement (66) de l'arbre d'entrée de l'engrenage ayant sa forme négative correspondante.

5. Visseuse à batterie selon la revendication 1, **caractérisée en ce que** l'engrenage (72) est utilisé comme engrenage planétaire dans un boîtier d'engrenage cylindrique creux (18) et peut être fixé en position à l'intérieur par une rondelle élastique (62) ou une tôle de fixation axiale, le boîtier d'engrenage (18) étant en outre pourvu d'une denture interne et servant de roue solaire.

6. Visseuse à batterie selon la revendication 1, **caractérisée en ce que** la rondelle élastique (62) s'appuie sur la denture interne du boîtier d'engrenage (18).

7. Visseuse à batterie selon la revendication 1, **caractérisée en ce que** la rondelle élastique (62) présente deux ailes (64) saillant sur sa périphérie, qui peuvent être encliquetées à la manière d'une fermeture à baïonnette dans deux renfoncements axiaux correspondants du boîtier d'engrenage (18), et/ou qui peuvent y être pressées, et/ou fixées par rotation contre tout desserrage axial.

8. Visseuse à batterie selon la revendication 1, **caractérisée en ce que** l'engrenage planétaire (72) est pourvu d'un système d'autoblocage de sorte que la broche d'entraînement de sortie (20) s'immobilise en rotation sous l'effet de l'application d'un couple depuis l'extérieur.

9. Visseuse à batterie selon la revendication 1, **caractérisée en ce que** les prolongements axiaux en forme de langues (60) du boîtier d'engrenage (18) sont disposés en haut et en bas avec une rainure annulaire (54) et un bourrelet annulaire (53).

10. Visseuse à batterie selon la revendication 1, **caractérisée en ce que** les prolongements axiaux (60) du boîtier d'engrenage (18) et les saillies (50, 51) du boîtier moteur (12) sont disposés sous forme asymétrique, afin d'éviter un montage erroné.

11. Visseuse à batterie selon la revendication 1, **caractérisée en ce que** le moteur et/ou le boîtier d'engrenage et/ou la batterie et/ou le plateau à l'intérieur des demi-coquilles sont intégrés dans la structure de solidité du boîtier moteur (12) ou de la poignée (14) de telle sorte qu'ils augmentent sa résistance à la déformation pour une utilisation de matériau minimale.

12. Visseuse à batterie selon la revendication 1, **caractérisée en ce que** l'on dispose, sur chaque demi-coque (16, 17) sur la poignée (14), une gaine de caoutchouc de grande surface, saillant en forme de bourrelet, avec une structure moletée.
